# EUROPÄISCHE PATENTANMELDUNG

(11) **EP 1 707 305 A1**
(43) Veröffentlichungstag der Anmeldung: **04.10.2006**
(21) Anmeldenummer: 06006281.7
(22) Anmeldetag: 27.03.2006
(51) Int. Cl.: B23K 37/00, B23K 9/16

(54) **Verfahren zum Schweissen von Metall**

(30) Priorität: 30.03.2005 DE 102005014833
(71) Anmelder: WESTFALEN AG, D-48155 Münster (DE)
(72) Erfinder: Thume, Matthias, 48167 Münster (DE)
(74) Vertreter: Weiss, Peter

(57) **Zusammenfassung**

Bei einem Verfahren zum Schweissen von Metallen, insbesondere von Stählen, hochlegierten Stahlen und Nichteisenwerkstoffen, unter einem Formiergas (Wurzelschutzgas), soll das Formiergas vor und/oder während der Zuführung zur Schweissstelle gekühlt werden.

## Beschreibung

Die Erfindung betrifft ein Verfahren zum Schweissen von Metallen, insbesondere von Stählen, hochlegierten Stählen und Nichteisenwerkstoffen, unter einem Formiergas (Wurzelschutzgas).

### Stand der Technik

Metalle werden heute durch verschiedene Schweissverfahren miteinander verbunden. Erwähnt werden sollen das Widerstandsschweissen, Laserschweissen, das WIG-, MIG- und Plasmäschweissen. Bei zumindest einigen dieser Schweissverfahren kommt es durch den Schweissprozess zur Bildung von Oxydationsprodukten. Dies führt beispielsweise bei hochlegierten Stählen zur Korrosionsanfälligkeit. Oxydationen sind durch die Entstehung von Anlauffarben erkennbar

Um dies zu verhindern, ist das Schweissen unter Formiergas bekannt. Als Formiergase finden Argon, Stickstoff und Argon - Wasserstoff-Gemische in gasförmigen Zustand Anwendung. Beispielsweise wird ein Formiergas in der DE 199 62 045 B4 beschrieben. Hierbei handelt es sich ein Wurzelschutzgas aus 50 bis 90 Vol.-% Argon (Ar), 10 bis 40 Vol.-% Helium (He) und 1 bis 10 Vol.-% Wasserstoff (H₂). Ausdrücklich wird dabei bestimmt, dass das Formiergas die gleiche Dichte wie Luft aufweist.

Die Behandlung der Schweissnaht oder der Wurzel mit diesem Formiergas erfolgt in einem geschlossenen System, da die Formiergase sehr flüchtig sind. Deshalb werden die Formiergase in Rohren, Behältern oder speziellen Formiereinrichtung der Schweissnaht oder Wurzel zugeführt. Aus der DE 299 12 286 U1 ist beispielsweise eine Vorrichtung zum Wurzelschweissen von Chrom-Nickel-Stählen bekannt, bei der an der Unterseite einer Schweissfuge von zwei zu verschweissenden Chrom-Nickel-Stahl-Teilen eine Formierglocke angeordnet ist. Diese Formierglocke ist mit einer flexiblen Zuleitung für das Inert- oder Formiergas verbunden. Die Formierglocke ist mittels Gleitführung längs unter der Schweissfuge verfahrbar.

### Aufgabe

Der vorliegenden Erfindung liegt die Aufgabe zugrunde, ein Verfahren der oben genannten Art zu entwickeln, bei dem zum Schweissen von Metallen unter Formiergas kein geschlossenes System verwendet werden muss.

### Lösung der Aufgabe

Zur Lösung der Aufgabe führt, dass das Formiergas vor und/oder während der Zuführung zur Schweissstelle gekühlt wird.

Die kleinsten Teilchen sind bei einem Feststoff nur wenig in Bewegung. Sie schwingen (bei Temperaturen über 0 K um eine feste Position, ihren Gitterplatz und rotieren meist um ihre Achsen. Bei 0 K sind die Teilchen nicht mehr in Bewegung. Je höher die Temperatur wird, desto heftiger schwingen/rotieren sie und der Abstand zwischen den Teilchen nimmt (meist) zu. So auch bei den Gasen, z.B. Stickstoff und Argon. Hier soll der Bereich knapp über 0 K (kleinste Teilchenbewegung) bis ca. 260 K durch das Patent geschützt werden. In diesem Temperaturbereich wird erreicht, dass sich die Gase bzw. Flüssigkeiten sehr träge und schwerer als Luft verhalten.

Damit wird verhindert, dass das Gas schnell flüchtig ist. So besteht die Möglichkeit, in offenen oder teilweise offenen Systemen zu schweissen bzw. zu formieren. Zum Beispiel kann ein offener Behälter mit kaltem Gas gefüllt werden. Wird von aussen geschweisst, wird die Nahtinnenseite durch das träge Gas im Behälter geschützt, ohne dass der Behälter geschlossen werden muss, wie dies bei der herkömmlichen Formierung nötig war.

Das Schweissen und Formieren unter "kalten" Gasen kann bei allen möglichen Schweissverfahren Anwendung finden. Beim Widerstandsschweissverfahren von hochlegierten Stählen wird durch die Widerstandserwärmung das Bauteil soweit erhitzt, dass sich Verbindungen der Werkstoffe ergeben. Hierbei entstehen Anlauffarben, die durch die Zugabe von kalten Gasen verhindert werden. Ferner entstehen bei der Widerstandsverschweissung durch das Anpressen und die gleichzeitige Erwärmung evtl. Schweissspritzer. Diese werden durch die Inertisierung verhindert. Gerade aber beim Widerstandsschweissen ist eine dichte Einhausung des Schweissprozesses in der Regel nicht möglich. Durch die Verwendung von "kaltem" Gas reicht die Verwendung eines Behälters, in dem das Gas lediglich steht. Gegebenfalls muss eine leichte Strömung mit kaltem Gas erfolgen, d. h., das gekühlte Formiergas wird an der Schweisstelle in Bewegung gehalten.

Beim Laserschweissen, aber auch beim Laserschneiden, werden die Schweiss-oder Schnittfugen durch Wärme beeinflusst, so dass es ebenfalls zu Anlauffarben nach dem Schneiden oder Schweissen kommen kann. Dies bezieht sich auf alle Bereiche der Bauteile, die durch Hitze in Folge Lasererwärmung beeinflusst werden. Erfolgt der Laserprozess in einer kalten Gasatmosphäre, ist die Abschirmung der Schweissstelle wesentlich erleichtert.

Auch bei dem WIG-, MIG- und Plasmaschweissen wird die Bildung von Anlauffarben in und um die Schweisszone durch das Formiergas verhindert. Auch die Wurzel der Schweissnaht wird frei von Anlauffarben.

## Patentansprüche

1. Verfahren zum Schweissen von Metallen, insbesondere von Stählen, hochlegierten Stahlen und Nichteisenwerkstoffen, unter einem Formiergas (Wurzelschutzgas),
**dadurch gekennzeichnet,**
**dass** das Formiergas vor und/oder während der Zuführung zur Schweissstelle gekühlt wird.

2. Verfahren nach Anspruch 1, **dadurch gekennzeichnet, dass** die Kühlung des Formiergases im Bereich von 0 - 260 K erfolgt, und dass es **dadurch** ein träges Fliessverhalten und eine grössere Dichte als Luft aufweist.

3. Verfahren nach Anspruch 1 oder 2, **dadurch gekennzeichnet, dass** das gekühlte Formiergas an der Schweissstelle in Bewegung gehalten wird.
